# EUROPEAN PATENT APPLICATION

(11) **EP 1 079 386 A2**
(43) Date of publication of application: **28.02.2001**
(21) Application number: 00402302.4
(22) Date of filing: 17.08.2000
(51) Int. Cl.: G11B 23/023

(54) **Cassette storage case**

(30) Priority: 17.08.1999 JP 23072399; 05.10.1999 JP 28445399; 05.10.1999 JP 28445099; 25.05.2000 JP 2000155006
(71) Applicant: SONY CORPORATION, Tokyo (JP)
(72) Inventor: Kazumoto, Yatabe, Shinagawa-ku, Tokyo (JP)
(74) Representative: Thévenet, Jean-Bruno

(57) **Abstract**

A slide type cassette storage case in which a tape cassette is inserted laterally through an insertion port provided on a side surface thereof and permits to eliminate a generation of warp or surface sink after molding because of a difference of thickness between concave grooves (35, 36) which retreat from an expanded portion of the tape cassette and thick portions (32e, 33e) along the concave grooves (35, 36). Thickness missing portions (48, 45) are provided substantially in the center of the thick portion (32e. 33e) along the concave grooves (35, 36).

## Description

### BACKGROUND OF THE INVENTION

### Field of the Invention

The present invention relates to a cassette storage case preferable for storage of a tape cassette such as audio compact cassette and more particularly to a slide type cassette storage case in which a cassette is inserted laterally from an insertion port provided on a side of the case and stored. Description of the Related Art

A compact cassette for use in audio equipment or the like is stored in a cassette storage case made of plastic or the like when it is not used.

Although conventionally, various types of the cassette storage cases have been embodied, an inventor of the present invention already proposed a new cassette storage case through Japanese Patent Application No. HE110-139087.

This cassette storage case is a slide type cassette storage case in which a cassette is inserted laterally through an insertion port provided on a side surface of the case and stored.

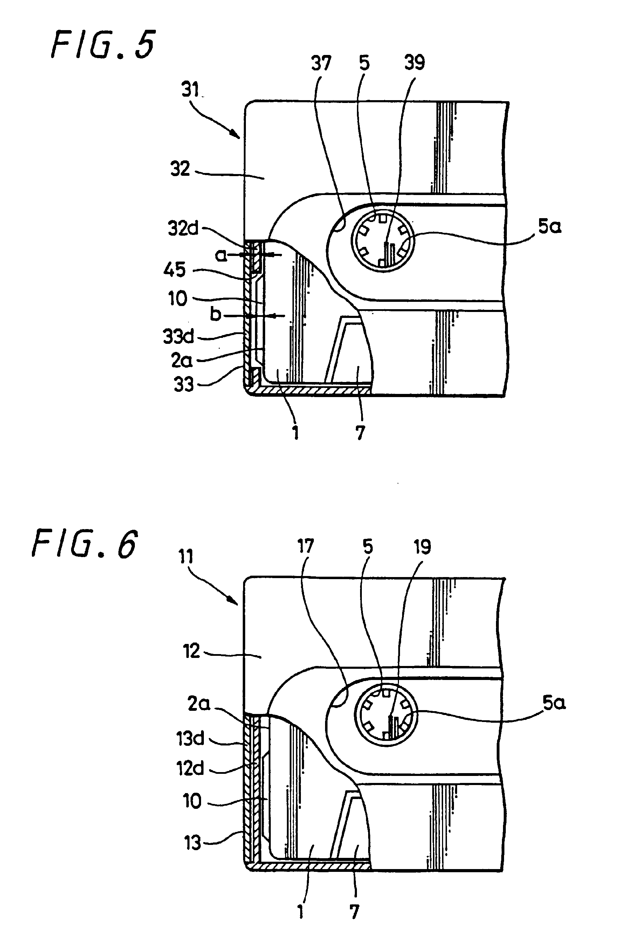

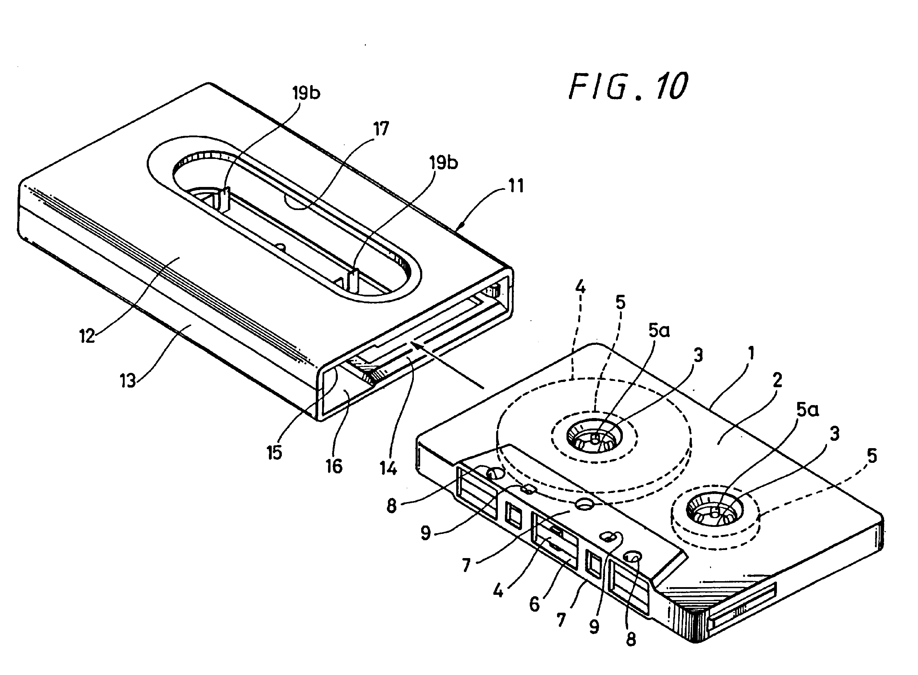

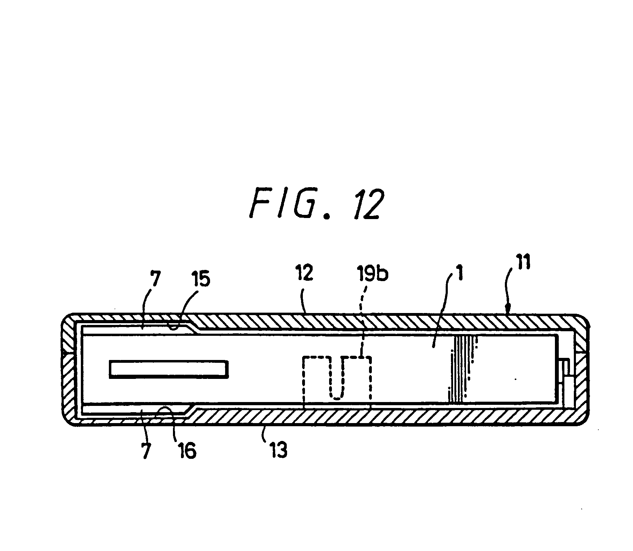

This conventional slide type cassette storage case will be described with reference to FIGS. 6 and 9-12.

In the same Figures, reference numeral 11 denotes a cassette storage case and an audio compact cassette I (hereinafter referred to as cassette) is inserted laterally into this cassette storage case 11 through an insertion port 14 provided on a side surface thereof and stored therein.

If a structure of the cassette 1 is described briefly, a case 2 of this cassette 1 has a thin casing structure in which a reel driving shaft insertion hole 3 is formed on each of the right and left sides. Inside the cassette case 2, a pair of tape reels 5 is rotatably accommodated in a magnetic tape 4 corresponding to the reel driving shaft insertion holes 3.

An opening 6 in which the magnetic tape 4 is exposed is formed on a front surface of the cassette case 2. Within the cassette case 2, a tape running path is formed such that the magnetic tape 4 from one side of the tape reel 5 (supply side reel) is wound up by the other side of the tape reel 5 (windup side reel) through this opening portion 6.

A magnetic head and the like are inserted into this opening portion 6 from a cassette deck. To cope with the thickness of the insertion portion of this magnetic head and the like, trapezoidal expanded portions 7 which are expanded from both sides of up and down are formed on a front portion of the cassette case 2.

Further, capstan shaft insertion holes 8 and positioning reference holes 9 are formed symmetrically on the right and left sides of this expanded portion 7.

The cassette storage case 11 in which this cassette 1 is to be inserted is comprised of a upper half 12 and a lower half 13, which are joined together. The upper half 12 is plastic molding product molded of, for example, GPPS (general purpose polystyrene) and the lower half 13 is plastic molding product molded of, for example, HIPS (impact resistant polystyrene). With the upper half 12 and the lower half 13 joined together, they are integrated with each other by ultrasonic fusion.

A completely open insertion port 14 is provided on a side surface of this cassette storage case 11. The cassette 1 is inserted laterally (in the longitudinal direction of the cassette case 2) through this insertion port 14 and stored therein.

This cassette storage case 11 is so constructed as to incorporate the cassette 1 substantially without any gap. Thus, inside the cassette storage case 11, concave grooves 15, 16 which recess from expanded portions 7 of the cassette 1 are formed on inner surface sides of the upper half 12 and lower half 13 in the lateral direction or in a cassette insertion direction.

Further, an opening portion 17 of an elongated hole long in the cassette insertion direction is formed in the central portion of the upper half 12 of the cassette storage case 11. When picking out the cassette 1 from the cassette storage case 11, a finger (for example, thumb) is inserted through this opening portion 17 to push the cassette 1 out of the insertion port 14.

Inside this cassette storage case 11, stopper pieces 18 are provided to prevent the cassette 1 from jumping out of such a cassette storage state.

A stopper piece 18 is formed integrally with the lower half 13 so as to protrude and an engaging protrusion 18a is provided at a tip portion thereof. When the cassette 1 is stored in the cassette storage case 11, the engaging protrusion 18a of this stopper piece 18 engages with an error erase preventing detection hole (not shown) provided in the back of the cassette case 2. As a result, the cassette 1 is held in a lightly locked state in the cassette storage case 11, thereby preventing the cassette 1 from jumping out (slipping out) of the cassette storage case I unexpectedly.

Further, reel stopper pieces 19b are provided inside the cassette storage case 11 to prevent an unnecessary rotation of the tape reels 5 in the cassette 1, thereby preventing its magnetic tape from being loose.

A reel stopper member 19 is a plastic molding product molded of for example, polypropylene (PP), in which reel stopper pieces 19b corresponding to reel driving shaft insertion holes 3 of the cassette 1 are formed on a base plate portion 19a thereof so as to be erected. Then, the base plate portion 19a is crimped to crimping protrusions 20 provided substantially in the center of the inner surface of the lower half 13 so as to protrude.

If the cassette 1 is inserted into the cassette storage case 11, the reel stopper pieces 19b are subjected to elastic deformation so that they are pressed down by the cassette 1. When the cassette 1 is stored in the cassette storage case 11 completely, the reel driving shaft insertion holes 3 of the cassette 1 correspond to the reel stopper pieces 19b, so that the reel stopper pieces 19b are elastically restored to their erected state. As a result, the reel stopper pieces 19b engage with the engaging protrusions 5a on an inner circumference of the tape reel 5, thereby blocking a rotation of the tape reel 5.

As described above, the conventional cassette storage case 11 is comprised of three parts including the upper half 12, the lower half 13 and the reel stopper member 19. As for the assembly procedure, first, the reel stopper member 19 is cnmped to the lower half 13 and after that, the upper half 12 and the lower half 13 are fused together by ultrasonic wave.

### SUMMARY OF THE INVENTION

Because the conventional cassette storage case 11 requires a complicated assembly process, production efficiency is low and this is a main reason for raising production cost.

Particularly in a process for fusing the upper half 12 and the lower half 13 together with ultrasonic wave, a warp occurs due to uneven thickness of the upper half or lower half, so that the fusion between the upper half and lower half is deviated. Consequently, there occurs a difference of step in the fused state or protrusion of the fusion, and thereby a number of wrong products are being produced and production efficiency is largely dropping.

Because in the slide type cassette storage case 11 having such a structure, when the cassette 1 is stored, a protrusion 10 on a side surface portion 2a of the cassette 1 comes into contact with a deep wall portion 12d of the upper half 12 as shown in FIG. 6, there is generated a large gap between the side surface portion 2a of the cassette 1 and the deep wall portion 12d. As a result, the cassette 1 is loose in the case so that a stabilized storage state cannot be secured.

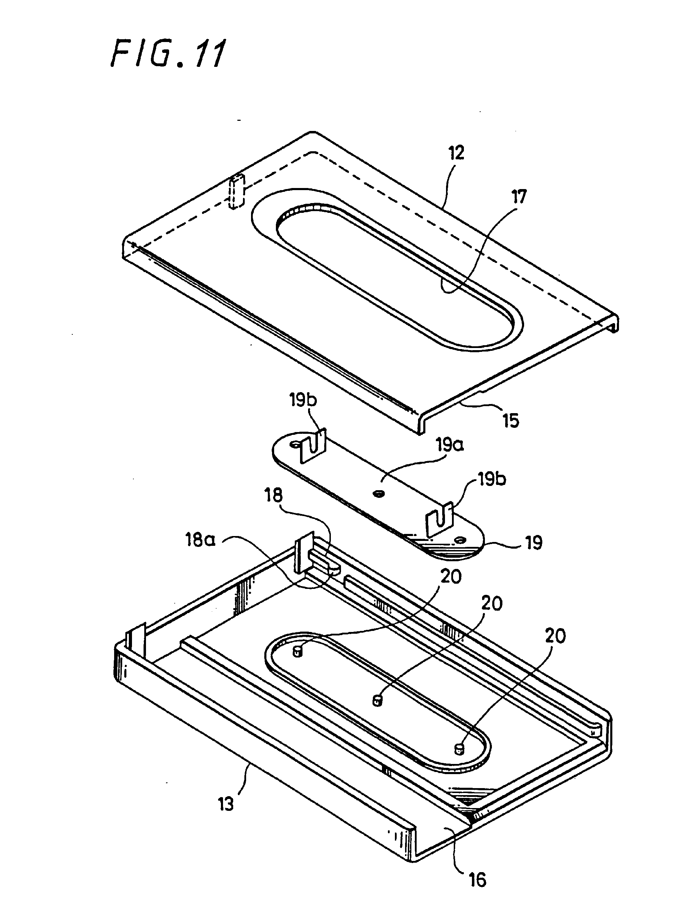

Further, the cassette storage case 11 has to be formed in such a size large enough for accommodating the cassette 1 completely. In the above described structure in which the protrusion 10 of the cassette 1 comes into contact with the deep wall portion 12d, the length thereof in the cassette insertion direction needs to be increased by a length of the protrusion 10. Thus, the size of the cassette storage case increases and more molding material is employed thereby leading to an increase of production cost. The problem becomes large in the case where the deep wall portion is to be formed by superposing the upper half on the lower half as is particularly shown in FIG. 11.

Further, since this cassette storage case is formed of resin material such as polypropylene as described above, there is such a problem that due to the characteristic of resin, warp or surface sink (deformation in a concave state) is generated due to contraction after molding (particularly polypropylene is contracted largely after molding because of crystalline resin so that an excessive warp or surface sink may be generated).

Such a warp or surface sink is likely to be generated in a portion having a large difference of thickness in a completed product. That is, because in the conventional cassette storage case described above, there is a large difference of thickness between the concave groove which retreats from the expanded portion of the cassette and the thick portion along the concave groove, the warp or surface sink is often generated at this portion after molding, so that the quality of a completed case is largely impaired.

The present invention is implemented in view of such problems and its object is, in the slide type cassette storage case in which a cassette is laterally inserted from an inserting port provided on one side surface thereof, to offer a new cassette storage case capable of ensuring a state in which the cassette is stored and in concrete terms.
1) To provide a structure whereby the case can be downsized.
2) To eliminate the generation of warp as well as surface sink at the time of molding to improve dimensional precision.
3) To eliminate with certainty the looseness (ricketiness) of the stored cassette.
4) To make it a theme to provide a cassette storage case capable of being surely and easily assembled as well as to improve production efficiency.

To solve the above problem, the present invention provides
1) a cassette storage case in which a cassette is inserted laterally through an insertion port provided in a side surface and stored, characterized in that a notch which retreats from a protrusion provided on a side surface portion of the cassette is formed in the deep wall portion.
   Because of this structure, in the cassette storage case of the present invention, the protrusion of the cassette is accommodated in the notch in the deep wall portion when the cassette is stored. Thus, the cassette is stored in a stabilized state without any looseness.
   In this structure, because the length in the cassette insertion direction of the cassette storage case can be reduced by a length corresponding to the protrusion as compared to the conventional example, the size of the cassette storage case can be reduced.
2) In a cassette storage case having a structure in which a tape cassette is inserted laterally through an insertion port provided on a side surface thereof and stored and having concave grooves which retreat from an expanded portion of the tape cassette formed in a cassette insertion direction of an inner surface of the case, characterized in further comprising thickness missing portions provided substantially in the center of the thick portion along the concave groove.
   In the cassette storage case of the present invention having such a structure, the difference of the thickness between the concave groove which retreats from the expanded portion of the cassette and the thick portion along the concave groove can be decreased, so that the generation of the warp or surface sink at this portion can be effectively suppressed.
3) In a cassette storage case having a structure in which a tape cassette is inserted laterally through an insertion port provided on a side surface thereof and stored and having concave grooves which retreat from an expanded portion of the tape cassette formed in a cassette insertion direction of an inner surface of the case, front and rear end portions in the cassette inserting direction along said concave groove are formed thick while the other portions thereof are formed as thickness missing portions and said thick portions are defined as cassette holding portions.
   In the cassette storage case of the present invention having such a structure, it is possible to surely hold the tape cassette in a state in which the tape cassette is stored at a predetermined position as well as to suppress the generation of the above mentioned warp and surface sink.
4) The present invention provides a cassette storage case comprised of a upper half and a lower half and in which a tape cassette is inserted laterally through an insertion port provided on a side surface thereof and stored, characterized in that the cassette storage case is molded integrally such that the upper half and the lower half are linked to each other in a developed state thereof and by bending a link portion between the upper half and the lower half as a hinge at the time of assembly, the upper half and the lower half are joined to each other and in that reel stopper pieces elastically deformable so as to engage with tape reels in the tape cassette to block a rotation thereof are formed integrally with an inner surface of the lower half.

In this case, the upper half and the lower half are fixed to each other by engagement.

Further, preferably, polypropyle resin is used as molding material thereof.

The cassette storage case of the present invention having such a structure can be assembled easily without generating a deviation or a difference of step between the upper half and the lower half at the time of assembly, thereby improving production efficiency and making it possible to reduce production cost.

Further, by using polypropylen resin as molding material of the cassette storage case, its impact resistance and heat resistance can be raised.

### BRIEF DESCRIPTION OF THE DRAWINGS

FIG. 1 is a perspective view showing a cassette storage case of the present invention;
FIG. 2 is a perspective view thereof in a developed state;
FIG. 3 is a structure diagram of a fixing portion of the upper half and lower half;
FIGS. 4A and 4B are explanatory diagrams for explaining the cassette storage state;
FIG. 5 is a theme explaining diagram of a cassette stored state corresponding to FIG. 7;
FIG. 6 is an exploded perspective view of a cassette stored state corresponding to FIG. 10;
FIG. 7 is a perspective view of the cassette storage case in a developed state showing another configuration according to the present invention;
FIG. 8 is an explanatory diagram of a state of a cassette being stored in the cassette storage case in FIG. 7;
FIG. 9 is a theme explaining diagram of a cassette stored state corresponding to FIG. 10;
FIG. 10 is a perspective view showing a conventional cassette storage case;
FIG. 11 is an exploded perspective view thereof; and
FIG. 12 is an explanatory diagram for explaining the cassette storage state of a conventional cassette storage case as shown in FIG. 10.

Hereinafter, a first embodiment of the present invention will be explained in detail with reference to the drawings. The first embodiment comprises mainly a configuration related to 1) of means for solving the problems and includes a configuration related to 4) of means for solving the problems.

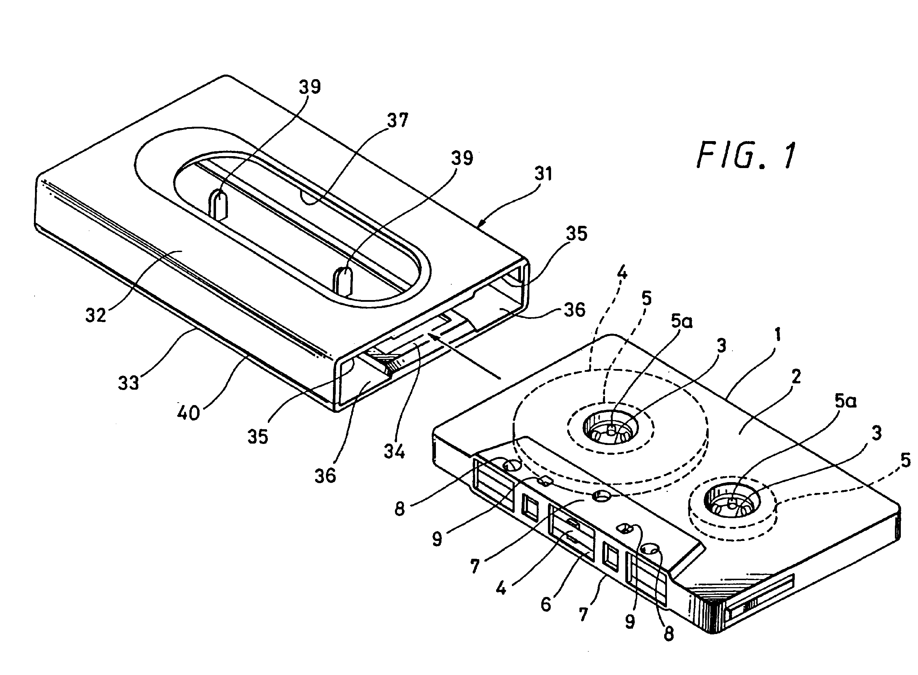

In FIG. 1, reference numeral 31 denotes a cassette storage case of the present invention. This cassette storage case 31 is comprised of a upper half (cover halo 32 and a lower half(base half 33 and is so constructed that a cassette 1 is inserted by sliding laterally through an insertion port 34 provided on a side surface thereof and stored.

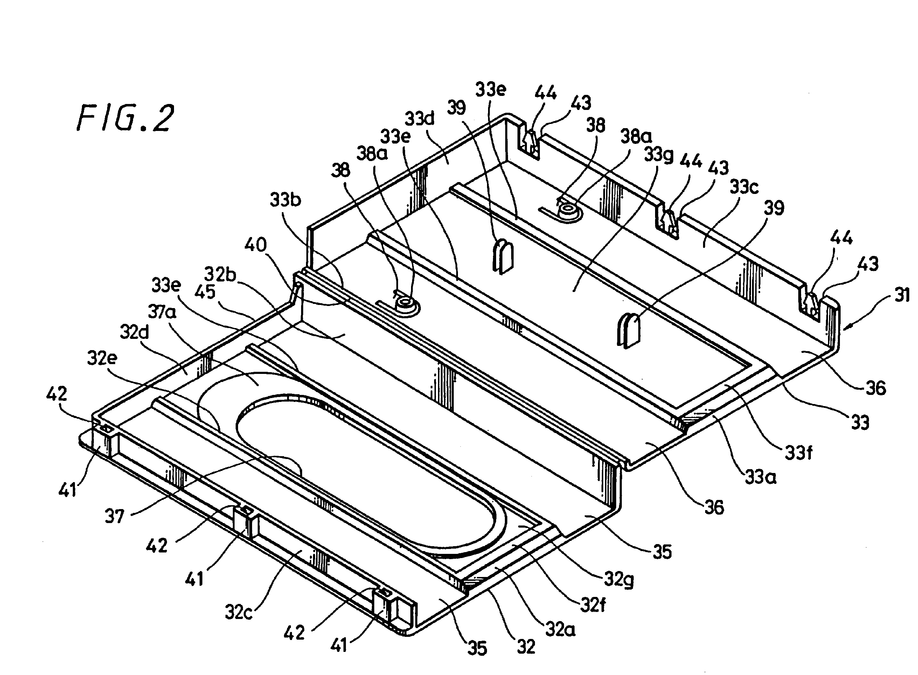

Polypropylene resin is preferably used as molding material of this cassette storage case 31. The cassette storage case is molded integrally in a developed state in which the upper half 32 and the lower half 33 are linked to each other as shown in FIG. 2.

Here, a side wall portion 32b of the upper half 32 and a side edge portion 33b of the lower half 33 are linked to each other through a thin link portion 40. At the time of assembly, the upper half 32 is bent with respect to the lower half 33 with this link portion 40 as a hinge and joined thereto.

The upper half 32 and the lower half 33 are joined together such that a side wall portion 32c and a deep wall portion 32d of the upper half 32 overlap inner surfaces of a side wall portion 33c and a deep wall portion 33d of the lower half 33 and then, with this joining state, they are fixed to each other by engagement.

That is, in this cassette storage case 31, fitting convex portions 41 are provided at multiple positions of an outer surface of the side wall portion 32c of the upper half 32 and an engaging hole 42 is formed at each of them. On the other hand, notched fitting concave portions 43 are formed in the side wall portion 33c of the lower half 33 correspondingly and an engaging protrusion 44 is provided so as to protrude there. This engaging protrusion 44 is formed in a tapered hook shape such that a tip thereof has a width.

When the upper half 32 and the lower half 33 are joined to each other, the fitting convex portion 41 and the fitting concave portion 43 engage with each other so that the upper half 32 and the lower half 33 are positioned accurately. At the same time, the engaging protrusion 44 is pressed into the engaging hole 42 so that they engage with each other. As a result, the upper half 32 and the lower half 33 are joined together and held in that state.

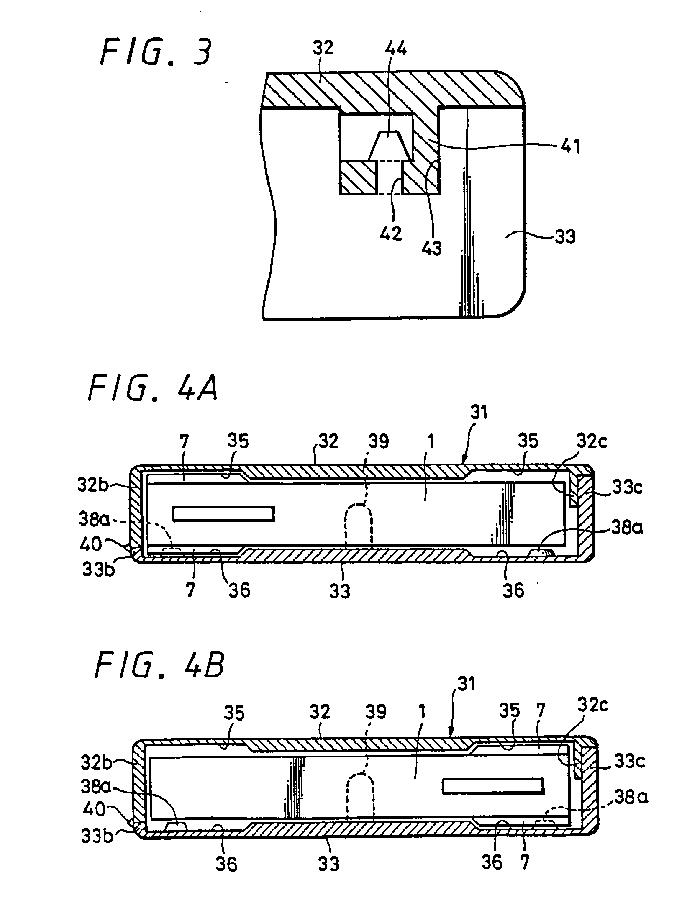

FIG. 3 shows its essential portion. In this manner, the fitting convex portion 41 is fit in the fitting concave 43 while the upper half 32 and the lower half 33 are in a state of being joined and at the same time, the engaging protrusion 43 engages with the engaging hole 42 by being press-fit thereinto. Consequently there is provided a structure in which the upper half 32 and the lower half 34 are correctly, surely and solidly joined.

The upper half 32 and the lower half 33 each have an open surface 32a, 33a which has no side wall. When the upper half 32 and the lower half 33 are assembled together, the open surfaces 32a, 33a are joined together so as to form an insertion port 34. The cassette 1 is inserted by sliding laterally through this insertion port 34.

This cassette storage case 31 is so constructed as to incorporate the cassette 1 substantially without any gap. Thus, inside the cassette storage case 31, concave grooves 35, 36 which recess from expanded portions 7 of the cassette 1 are formed on the inner surface side of each of the upper half 32 and lower half 33 in a cassette insertion direction.

The concave grooves 35, 36 are provided symmetrically on both sides in the cassette insertion direction, so that the cassette 1 can be inserted into the cassette storage case 31 irrespective of setting the expanded portion 7 on the left side in the cassette insertion direction or on the right side.

As evident from FIG. 2, a central portion (portion between the concave grooves 35 on both sides) on the inner surface side of the upper half 32 is formed of a thin portion 32g excluding thick portions 32e, 32f along the concave portions 35 and open surface 32a. Likewise, the central portion (portion between the concave grooves 36 on both sides) on the inner surface side of the lower half 33 is formed of a thin portion 33g excluding thick portions 33e, 33f along the concave portions 36 and open surface 33a. As a result, a structure aiming at reducing molding material is achieved.

Further, an opening portion 37 of an elongated hole long in the cassette insertion direction is formed in the central portion of the upper half 32 of the cassette storage case 31. When picking out the cassette 1 from the cassette storage case 31, a finger (for example, thumb) is inserted through this opening portion 37 to push the cassette 1 out of the insertion port 34.

A rib 37a is formed around the opening portion 37 in the thin portion 32g on the inner surface side of the upper half 32 so as to improve the strength of the upper half 32 thereby preventing a distortion.

Inside this cassette storage case 31, stopper pieces 38 are provided to prevent the cassette 1 from jumping out of such cassette 1 storage condition.

This stopper piece 38 is formed by providing the lower half 33 of the cassette storage case 31 within the concave groove 36 thereof with a U-shape notched groove and an engaging protrusion 38a is provided at a front end thereof.

Then, when the cassette 1 is inserted into the cassette storage case 31, the stopper pieces 38 are pressed down by the expanded portions 7 of the cassette 1 for a while. After the cassette 1 is inserted into the cassette storage case 31 completely, the engaging protrusion 38a engages with a capstan shaft insertion hole 8 in the expanded portion 7 of the cassette 1 by its elastic repellent force. Consequently, the cassette 1 is held in light locking state within the cassette storage case 31, thereby preventing the cassette 1 from jumping out (slipping out) of the cassette storage case 31 unexpectedly.

Because this cassette storage case 31 is so constructed that the cassette 1 can be inserted thereinto in any direction of the cassette as described above, correspondingly, the stopper pieces 38 are provided symmetrically on both the right and left sides in the cassette insertion direction.

Further, reel stopper pieces 39 are provided inside the cassette storage case 31 to prevent an unnecessary rotation of the tape reels 5 in the cassette 1 thereby preventing its magnetic tape from being loose.

This reel stopper piece 39 is formed integrally on the thin portion 33g so as to rise up on the inner surface side of the lower half 33 corresponding to the reel driving shaft insertion holes 3 of the cassette 1. Here, two pieces provided in parallel in the cassette insertion direction act as a pair.

When the cassette 1 is inserted into the cassette storage case 31, the reel stoppers 39 are subjected to elastic deformation with the result that they are pressed down by the cassette 1. When the cassette 1 is stored in the cassette storage case 31 completely, the reel driving shaft insertion holes 3 of the cassette 1 correspond to the reel stopper pieces 39, so that the reel stopper pieces 39 are elastically restored to their erected state. As a result, the reel stopper pieces 39 engage with the engaging protrusions 5a on an inner circumference of the tape reel 5, thereby blocking a rotation of the tape reel 5.

Two pieces of the reel stopper pieces 39 engage with the tape reels 5 at the same time, so that a rotation of the tape reels 5 can be blocked securely.

In this embodiment of the cassette storage case 31 having such a structure, a concave notch 45 which retreats from the protrusion 10 on the side surface portion 2a of the cassette 1 is formed on a deep wall portion 32d of the upper half 32 opposing the side surface portion 2a when the cassette 1 is stored.

Because this cassette storage case 31 is so constructed that the cassette 1 can be inserted in any direction as described above, correspondingly, the notches 45 are formed symmetrically on both the right and left in the cassette insertion direction.

Further in this structure, as shown in FIG. 5, the thickness "a" of the deep wall portion 32d in which the notch 45 is to be formed is preferred to be the same as or larger than a protruding length "b" of the protrusion 10 of the cassette 1.

Because of the above described structure, when the cassette 1 is stored in the cassette storage case 31 of this embodiment, as shown in FIG. 5, the protrusion 10 of the cassette 1 is accommodated in that notch 45 in the deep wall portion 32d. Therefore, there is not generated a large gap between the side surface portion 2a of the cassette 1 and the deep wall portion 32d. Consequently, the cassette 1 is stored in a stabilized state without any gap in the case.

Because the thickness "a" of the deep wall portion 32d in which the notch 45 is to be formed as described above is the same as or larger than the protruding length "b" of the protrusion 10 of the cassette 1, the notch 45 has a plenty of room for accommodating the protrusion 10 of the cassette 1. Consequently, the cassette 1 is stored in a stabilized state.

In this structure, because the protrusion 10 of the cassette 1 is accommodated in the notch 45 of the deep wall portion 32d, the length in the cassette insertion direction of the cassette storage case 31 can be reduced by a length corresponding to the protrusion 10 as compared to the conventional one. Thus, the size of the case can be reduced and an amount of molding material for use can be suppressed, thereby leading to reduction of production cost.

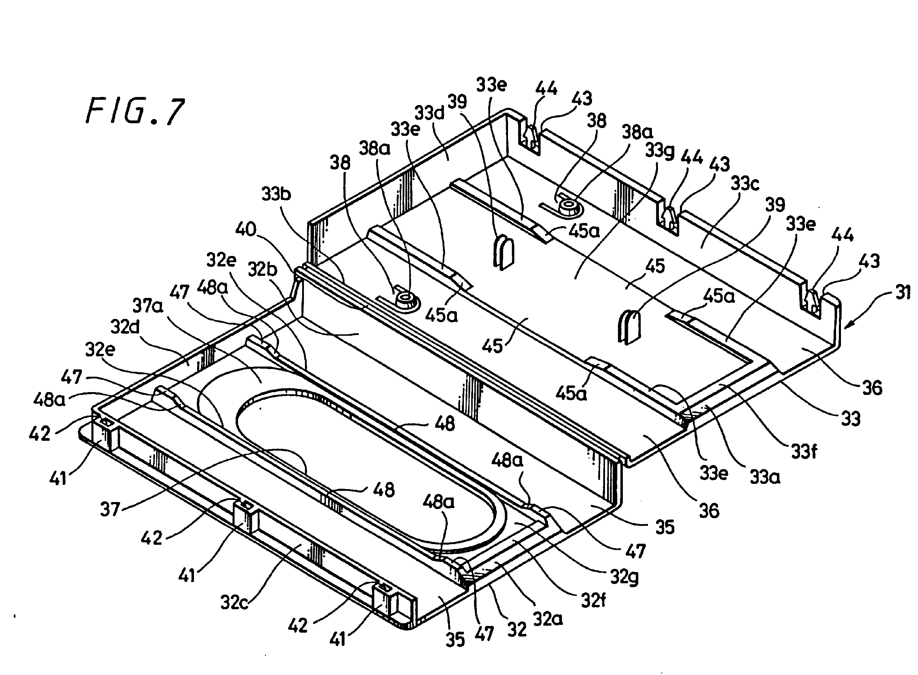

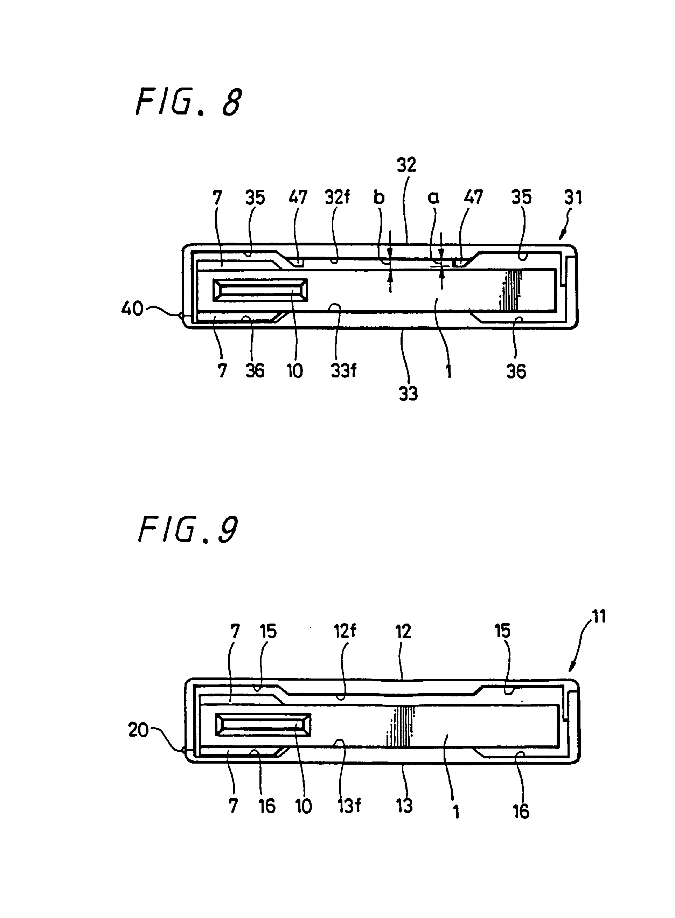

Next, a second embodiment of the present invention will be explained with reference to the drawings (FIGS. 7 and 8). The second such embodiment comprises a configuration related to 2), 3) of means for solving the problems and includes a configuration related to 4) of means for solving the problems.

In the same Figures 7 and 8, reference numeral 31 denotes a cassette storage case and this cassette storage case 31 is comprised of a pair of cassette halves, namely, upper half (cover half) 32 and a lower half (base half) 33. Then, a cassette 1 is inserted laterally through an insertion port 34 provided on a side surface and stored there.

Polypropylene resin is preferably used as molding material of this cassette storage case 31. The cassette storage case is molded integrally in a developed state in which the upper half 32 and the lower half 33 are linked to each other as shown in FIG. 7.

The prominent structure of the present invention in the cassette storage case 31 having such a structure is that the thickness missing portion 45, as is shown in FIG. 7, is provided substantially in the center of the thick portion 33e along the concave groove 36 of the lower half 33.

That is, although conventionally, the thick portion 33e is formed over the entire length of the cassette in the cassette insertion direction along the concave groove 36, according to this embodiment, front and rear portions in the cassette insertion direction along each of the concave grooves 36 are left as the thick portions 33e so as to form a central portion therebetween as the thickness missing portion 45.

As evident from the Figure 7, most preferably, the thickness missing portion 45 is formed such that the thickness of the case at this thickness missing portion 45 is the same as that of the thin portion 33g (that is, the thickness of the thick portion is eliminated so that it becomes the same plane as the thin portion 33g).

Because of such a structure, in the cassette storage case 31 of this embodiment, a difference of thickness between the concave groove 36 of the lower half 33 and the thick portion 33e along the concave groove 36 can be reduced so that a change of the thickness between the concave groove 36 and the thick portion 33e becomes gentle. Thus, after the case is formed, a generation of warp or surface sink at this portion is effectively prevented.

Further, in this structure, both end portions 45a (a portion between the thickness missing portion 45 and the thick portion 33e) of each of the thickness missing portions 45 provided in the center of the thick portion 33e is formed in a gentle slope.

As a result, when the cassette 1 is taken in or out, it is not caught by the end portions 45a of the thickness missing portion 45 or if a label is pasted on the cassette, the label is not caught by the end portions 45a of the thickness missing portion 45. Thus, the cassette can be taken in or out smoothly.

On the other hand, in the upper half 32, cassette holding portions 47 are provided so as to hold the cassette 1 substantially without any gap.

The cassette holding portions 47 are formed so as to be swollen at front and rear end portions in the cassette insertion direction of the thick portion 32e along each of the concave grooves 35. In the thick portion 32e, the cassette holding portions at both ends thereof are formed thicker and a central portion therebetween is formed as the thickness missing portion 48 thinner than the cassette holding portion 47.

With this structure, as shown in FIG. 8, a height "a" of the cassette holding portion 47 is formed substantially the same as a gap "b" between the cassette 1 and the upper half 32 when the cassette 1 is stored in a state that it is located near the lower half 33. Thus, the cassette 1 is stored and held by the cassette holding portion 47 such that there is substantially no gap in the case.

In the cassette storage case 31 of this embodiment having such a structure, even if pressure or the like is applied from outside, deformation such as a crush or distortion is not generated in the case. Although heat and pressure are applied to a case during wrapping of the case with a wrapping film in a wrapping process, for example, a deformation or distortion is never generated in the case having this structure and thus, the wrapping film is prevented from wrinkling after the wrapping.

Further, because the cassette 1 is held in the case without any looseness, an unnecessary rotation of the tape reel 5 can be prevented.

With this structure, because the thickness missing portion 48 is provided in the central portion between the cassette holding portions 47 at both ends, a generation of warp or surface sink at this portion is effectively prevented after molding of the case.

In this structure, both end portions 48a (portion between the thickness missing portion 48 and the cassette holding portion 47) of each of the thickness missing portions 48 is formed in a gentle slope. As a result, when the cassette 1 is taken in or out, it is not caught by the end portions 48a of the thickness missing portion 48 or if a label is pasted on the cassette, the label is not caught by the end portions 48a of the thickness missing portion 48. Thus, the cassette can be taken in or out smoothly.

Particularly in the cassette storage case having the reel stopper pieces 39 like this example, it is preferable to provide a cassette half (lower half 33 in this example) containing the reel stopper pieces 39 and an opposite side cassette half (upper half 32 in this example) with the thickness missing portion 48.

When the cassette 1 is inserted (or taken out), as described above, the reel stopper pieces 39 of the lower half 33 are deformed such that they are pressed down. Because in this structure, the thickness missing portions 48 are provided on the upper half 32 which is an opposite side of the reel stopper pieces 39, the cassette 1 is capable of moving away toward the upper half 32 in the case except near the insertion port. Therefore, the reel stopper pieces 39 are deformed without any limitation and restored to engage with the tape reel 5. When the cassette 1 reaches the deepest portion of the case, the cassette 1 is held such that it rides over the cassette holding portion 47. As a result, the cassette can be taken in and out easily and when it is carried, looseness of the cassette is prevented securely.

In this structure, to make the cassette move easily toward the upper half 32 within the cassette case, it is desirable to form the thickness missing portion 48 in a wide range as shown in the Figure 7.

As described above, the cassette storage case 31 is molded integrally such that the upper half 32 and the lower half 33 are linked to each other. By bending with respect to the link portion 40, they are assembled by engagement. As a result, the assembly can be carried out easily without generating a deviation or a difference of step between the upper half 32 and the lower half 33.

Further, because the reel stopper pieces 39 for blocking a rotation of the tape reels 5 in the cassette 5 are formed integrally with the cassette storage case 31, a process for installing the reel stopper pieces 39 is not necessary unlike conventionally. Thus, the assembly is further facilitated.

This cassette storage case 31 is molded of polypropylene. Because this is material having an excellent impact resistance and heat resistance, it is possible to provide a high quality cassette storage case by taking advantage of the characteristic of that material.

Further, because polypropylene resin is material lighter than polystyrene resin conventionally used, it contributes to reduction of the weight of the cassette storage case.

Although an example of the embodiment of the present invention has been described, the present invention is not limited to this example.

In the cassette storage case described above, although the upper half and the lower half are molded integrally, the present invention may be applied to such a cassette storage case in which the upper half and the lower half are molded separately and assembled by ultrasonic wave fusion or the like.

As described above, according to the present invention, in the slide type cassette storage case in which a tape cassette is inserted laterally through an insertion port provided on a side surface, the notch which retreats from a protrusion on a side surface portion of a tape cassette is formed in the deep wall portion thereof. As a result, looseness of the tape cassette in the case is eliminated and the tape cassette can be stored in a stabilized state. Therefore, the size of the case can be reduced and the production cost can be also reduced.

As described above, according to the present invention, in the slide type cassette storage case in which a tape cassette is inserted laterally through an insertion port provided on a side surface, the thickness missing portions are provided substantially in the center of the thick portion along the concave groove which retreats from the expanded portion of a tape cassette. As a result, the difference of the thickness between the concave groove and the thick portion can be reduced. Therefore, a generation of the warp or surface sink at this portion after molding of the case is effectively suppressed so that a high quality cassette storage case can be provided.

Because the cassette storage case can be assembled easily without generating a deviation or difference of step between the upper half and the lower half, production efficiency is improved thereby leading to reduction of production cost and at the same time, because polypropylen resin is used as the molding material of the cassette storage case, impact resistance and heat resistance thereof can be improved and further, the reduction of the weight thereof can be achieved.

Having described preferred embodiments of the present invention with reference to the accompanying drawings, it is to be understood that the present invention is not limited to the above- mentioned embodiments and that various changes and modifications can be effected therein by one skilled in the art without departing from the scope of the present invention as defined in the appended claims.

## Claims

1. A cassette storage case comprised of a upper half (32) and a lower half (33) and in which a tape cassette (1) is inserted laterally through an insertion port (34) provided on a side surface thereof and stored, wherein
the cassette storage case (31) is molded integrally such that the upper half (32) and the lower half (33) are linked to each other in a developed state thereof and by bending a link portion between the upper half (32) and the lower half (33) as a hinge at the time of assembly, the upper half (32) and the lower half (33) are joined to each other and
reel stopper pieces (39) elastically deformable so as to engage with tape reels (5) in the tape cassette to block a rotation thereof are formed integrally with an inner surface of the lower half (33).

2. A cassette storage case according to claim 1, wherein polypropylene resin is used as molding material thereof.

3. A cassette storage case comprised of a upper half (32) and a lower half (33) and in which a tape cassette (1) is inserted laterally through an insertion port (34) provided on a side surface thereof and stored, wherein
a deep wall portion opposing said inserting port (34) is formed such that a deep wall (32d) of the upper half (32) is superposed on a deep wall (33d) of the lower half (33) and a notch (45) which retreats from a protrusion (10) provided on a side surface portion (2a) of the cassette (1) is formed on the inner surface side of the deep wall portion (32d).

4. The cassette storage case according to claim 3, wherein a thickness (a) of the deep wall portion (32d) in which the notch (45) is formed is larger than a protruding length (b) of the protrusion (10) of the tape cassette (1).

5. A cassette storage case having a structure in which a tape cassette (1) is inserted laterally through an insertion port (34) provided on a side surface thereof and stored and having concave grooves (35, 36) which retreat from an expanded portion of the tape cassette (1) formed in a cassette insertion direction of an inner surface of the case, wherein
thickness missing portions (48, 45) are provided substantially in the center of the thick portion (32e, 33e) along the concave grooves.

6. The cassette storage case according to claim 5, wherein front and rear portions (47) in the cassette insertion direction along the concave grooves (35, 36) are formed thick while the other portions thereof are formed as thickness missing portions (48).

7. The cassette storage case according to claim 6, wherein the front and rear end portions (47) in the cassette insertion direction along the concave grooves (35, 36) are formed as cassette holding portions for holding the tape cassette (1) substantially without any gap in the case.

8. The cassette storage case according to claim 5, wherein the thickness of the thickness missing portion (45) is substantially the same as the thickness of thin portion (33g) adjacent to the thick portion (33e).

9. The cassette storage case according to claim 3 or claim 5, wherein the cassette storage case (31) is constituted such that the upper half (32) and the lower half (33) are integrally molded so as to be linked to each other in a developed state thereof and by bending a link portion (40) between the upper half (32) and the lower half (33) as a hinge at the time of assembly, the upper half (32) and the lower half (33) are joined to each other and the upper half (32) and the lower half (33) are fixed by engagement.

10. The cassette storage case according to claim 1 or claim 9, wherein the upper half (32) and the lower half (33) are fixed by engagement.
